# EUROPEAN PATENT APPLICATION

(11) **EP 1 780 620 A1**
(43) Date of publication of application: **02.05.2007**
(21) Application number: 05023501.9
(22) Date of filing: 27.10.2005
(51) Int. Cl.: G05B 19/042

(54) **Appliance having program options and settings**

(71) Applicant: Electrolux Home Products Corporation N.V., 1930 Zaventem (BE)
(72) Inventor: Amaral, Henrique, 90763 Fürth (DE)
(74) Representative: Baumgartl, Gerhard Willi

(57) **Abstract**

The invention relates to an appliance, in particular a household-appliance (1, 40, 42), comprising a processing unit (10) adapted to control at least one operation mode of the appliance (1, 40, 42) and an operator device (13) connected to the processing unit and adapted to be operated by a user to select at least one operation mode of the appliance. According to the invention, the operator device (13) comprises a biometric detection device (20) transmitting a biometric signal to the processing unit and the procession unit (10) is adapted to select and/or to execute the at least one operation mode in dependency of the biometric signal.

## Description

The present invention relates to an appliance having program options to be set by a user, in particular it relates to a household-appliance which is to be operated under individual settings.

According to the user's needs, present home appliances offer an increasing number of program options to adapt an operation mode of the home appliance to the specific needs of the user. Dishwashers for example provide function buttons to select different dishwashing programs and parameters for the program, for example the temperature, an option to save energy and water and a starting time for dishwashing. Programmable options for optimizing the dishwashing machine are for example the settings of the water softener in dependency of the water hardness. Another example is the increasing adaptability of an espresso machine in which the individual steps of the espresso brewing can be trimmed by the user to meet his or her perfect taste preferences. Changes in the settings require either going into the menu structures to change standards or pre-settings or require lots of function buttons where different program configurations can be activated.

It is an object of the invention to provide an appliance as well as a method of selecting an operation mode or setting which provide a simple access to individual program options and settings and provide an increased operational safety.

The invention is defined in claims 1 and 13, respectively.

Particular embodiments are set out in the dependent claims.

According to claim 1, the appliance is provided with a biometric detection device connected to a processing or control unit of the appliance. The biometric detection device scans or detects characteristic and individualizing features of a user to generate a biometric detection signal. Normally the biometric detection signal comprises a plurality of individual signals or a sequence of signals such that different users can be differentiated by their individual pattern of signals or sequence of signals. An assignment between the biometric detection signal and for example a user identification code is made in the biometric detection device, if this includes a corresponding processing capability. Or the assignment is made within a processing unit of the appliance or a remote device to which the biometric detection signal is sent via a communication connection between the biometric detection device and the processing unit.

The biometric detection device is part of the operator device of the appliance used by the operator to select a program option, to change a setting option and/or to set variable program parameters of the program to be executed by the processing unit when controlling the appliance. The operator device preferentially comprises additional operation units, for example function buttons or the like such that additional program options and/or parameters may be selected or the appliance may be operated by these additional operation units, when the biometric detection device should not be used by the operator.

The use of the biometric detection device and the assignment of configurable program options and/or parameters in dependency of the biometric signal significantly reduce configuration time and configuration knowledge being necessary to set up or re-program the appliance. The enabling/disabling of settings and/or options using the biometric detection results for example in an immediate adaptation of the setup to the different needs, preferred taste of individuals or even to prevent others to use the appliance (e.g. children). In particular, if there is a plurality of different operators using different settings, just one detection step is necessary to come to the preferred tuning of the appliance. It is not necessary to remember lots of sequences to re-program the appliance to the preferred program sequence. In an embodiment or alternatively unauthorized use of the appliance is prevented which increases the operation security. For example users which are not authorized to use the appliance are excluded or dangerous operation programs of an appliance are excluded depending on the operation capability of the user. In particular only adults are authorized to switch on a cooking hob and small children in the household are excluded therefrom, while a teenager may be allowed to use the hob up to a specified heating energy.

In one embodiment the processing unit of the appliance is connected to a storing unit which stores at least one individualized biometric signal, preferentially a plurality of individualized biometric signals, and the processing unit is adapted to execute the selected operation mode which is selected by the assignment stored in their storing unit between the biometric signal and the at least one operation mode. Alternatively or additionally the processing unit is connected to a communication device which retrieves assignments between biometric signals and an operation mode from a remote processing unit. Thereby the internal storing capacity of the storing unit can be reduced by accessing remote storing capability or the updating of assignments between individual biometric signals (i.e. a new operator) and the program options/parameters to be selected is made by retrieving central or external information. In particular, if a plurality of appliances (the same or different types) are connected to a network, the central storing of individualizing biometric data and assignments to program options increases the flexibility of the operator and the appliances bound into the network.

In another preferred aspect, a programming of the operation mode (program options and/or program parameters or settings) is provided at a remote processing unit, for example a user PC or a server station, where for example the graphical display of the options to be set and the configuration possibilities are improved as compared to the limited operation communication flexibility of an appliance.

In a preferred embodiment the biometric detection device is a fingerprint detector which can be easily integrated at the outer surface of the appliance and which corresponds to conventional operation of an appliance in which the program mode is activated just by 'touching' the appliance start button. However, operator recognition can also be performed by other biometric detection devices like retina scanners, face recognition units or the like.

Reference is made in detail to a preferred embodiment of the invention, an example of which is illustrated in the accompanying drawing which shows:

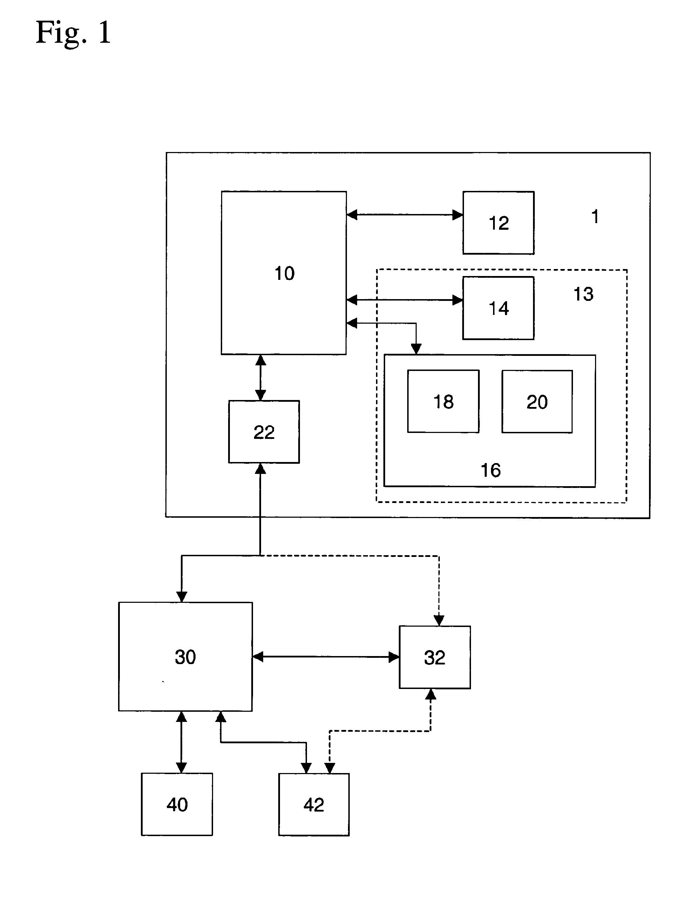

- Fig. 1: a block diagram of the control units of an espresso machine and its connection to external devices.

Fig. 1 shows a schematic block diagram of internal control elements of an espresso machine 1 and an external device connected thereto. The internal control elements provided to control, modify and monitor the operation of the espresso machine 1 are a central processing unit 10 (CPU in the following), a display 14, an input unit 16, a memory 12 and a communication device 22, all being connected to the CPU 10. The input unit 16 and the display 14 are part of a user interface 13 for operating the espresso machine. In the memory 12 the control program, configuration data program option and parameter data as well as fingerprint recognition data are stored. The display 14 is a multi-line LCD display in which the status, error messages and program options of the espresso machine 1 are displayed. The input unit 16 comprises an operating panel 18 having function buttons and a fingerprint reader 20 to scan a fingerprint pattern for example from a forefinger of a user. Via activation of the function buttons provided in the operating panel 18 the user can either recall standard operation programs or individualized predefined program sequences (in connection with the identification by the fingerprint reader 20 as described below). Further, the function buttons enable the user to go through a multi-level menu which allows service settings and individual programming of the espresso machine corresponding to the user's preferences.

In a learning mode of the programming sequence the operator puts his forefinger on the fingerprint reader 20 to scan a fingerprint recognition pattern to be stored in the memory 12 and which serves to identify the user. Once the finger print pattern is stored, the operator can program his individual program options and parameters offered from the configuration program of the espresso machine to set his personal configuration. In the example of the embodiment described herein the personal configuration of the espresso machine 1 includes the amount of coffee powder to be grinded for brewing the espresso, the total amount of water to be sent through the espresso powder, the duration of pre-brewing before starting the main brewing and the like. Once the individualizing fingerprint pattern and the individual configuration settings are stored within the memory 12, the user can recall his personal settings by just pointing his forefinger to the fingerprint reader 20, and the CPU 10 then controls an operation sequence in accordance with the operation settings recalled from memory 12 using the individualizing fingerprint pattern.

In an alternate embodiment individualizing program options may be stored for different operation modes of the espresso machine 1 such that after pointing with the forefinger to the fingerprint reader 20 different options for brewing coffee or espresso are displayed in the display 14 and one of them can be selected by additionally pushing one of the function buttons in the operating panel 18. Thereby selection may be made between the individual settings for brewing espresso, individual settings for brewing a cappuccino and the like.

In addition to program the individual settings for the user by providing the menu selections via the user interface 13, the user also can remotely program the espresso machine 1. As shown in Fig. 1 the CPU 10 is connected to the communication device 22 which in turn provides a communication connection to a server (or additionally or alternatively to a user PC 32 as indicated by the dotted line). The server 30 is connected to a user PC 32 running a programming tool to set the individual options and parameters for the espresso machine 1. Scanning and storing of the fingerprint pattern may also be done by a fingerprint reader provided at the user PC 32 (not shown). The program setting data for the espresso machine 1 assembled by the programming tool run at the user PC 32 are transmitted via the server 30 and the communication device 22 to the memory 12 of the espresso machine 1. Alternatively, if the user PC.32 is directly connected to the espresso machine, the data are directly transmitted to the espresso machine.

In an extended operation mode the espresso machine 1 is permanently connected to the server 30 or the user PC 32 such that the individualized programming data or the fingerprint pattern data are stored in the server 30 or the user PC 32 and retrieved from there to the CPU 10 via the communication device 22. So, if the user places his forefinger to the fingerprint reader 20 in the espresso machine 1, the CPU 10 can first look to the memory 12 for individualized program data and, if there should be no fingerprint pattern as actually detected by the fingerprint reader 20, it searches the server 30 or user PC 32 for such a pattern and associated individualized program data.

Examples for individual settings or options which are called from a configuration memory when recognizing a user from his finger pattern are: Display settings for a user interface like contrast, brightness, type size, color and so on. As mentioned above a safeguard may be installed preventing use or particular use of a home appliance by children

As also shown in Fig. 1 a washing machine 40 and a dishwasher 42 are in communication connection with the server 30 and they have the capability to communicate with the server 30 or the user PC 32 as previously described under reference to the espresso machine 1. Individualized program data for the washing machine 40 include for example the addition and the amount of a softener to be added after finishing the main washing program, and/or the maximum turning speed during the spinning of the laundry. Also general settings may be provided in this way, for example the water hardness or the like. Programming options for the dishwasher 44 are for example options for different degrees to save energy (liquid temperature, rinsing temperature) or water (bio-modus). As mentioned above in connection with the espresso machine, these settings may be done remotely via the user PC 32 or via the user interfaces provided at the washing machine 40 and the dishwasher 42.

Connecting the home appliances like the espresso machine 1, the washing machine 40 and the dishwasher 42 to a network via the server 30 provides the possibility to centrally program and modify the program options and parameters of the appliances and also to centrally store them. If, for example, in a company identical espresso machines are provided at a plurality of places, the programming has only to be done once and user recognition and individual programming can be recalled from any espresso machine connected to the network. Of course the home appliance 1, 40, 42 can do an uplink from the CPU to the server 30 to transmit service and maintenance requirements to a central servicing station like the server 30. Alternatively or additionally billing information can be sent to the server as soon as and to the extent to which an individualized user has requested service from the appliance.

### Reference Numerals List

- 1: espresso machine
- 10: CPU
- 12: memory
- 13: user interface
- 14: display
- 16: input unit
- 18: operating panel
- 20: fingerprint reader
- 22: communication device
- 30: server
- 32: user PC
- 40: washing machine
- 42: dishwasher

## Claims

1. Appliance, in particular household-appliance (1, 40, 42), comprising:
a processing unit (10) adapted to control at least one operation mode of the appliance (1, 40, 42); and
an operator device (13) connected to the processing unit and adapted to be operated by a user to select at least one operation mode of the appliance;
**characterized in that**
the operator device (13) comprises a biometric detection device (20) transmitting a biometric signal to the processing unit; and
the procession unit (10) is adapted to select and/or to execute the at least one operation mode in dependency of the biometric signal.

2. Appliance according to claim 1, wherein the at least one operation mode comprises at least one user-selectable option, mode setting and/or parameter, and wherein the processing unit is further adapted to assign previously stored options, mode settings and/or parameters for the at least one user-selectable option and/or parameter and/or mode setting in dependency of the biometric signal.

3. Appliance according to claim 1 or 2, comprising a storing unit (12) storing assignments between the biometric signal and the at least one operation mode, in particular between the biometric signal and the at least one program, mode setting option and/or parameter.

4. Appliance according to claim 1, 2 or 3, comprising a communication device (22) connected to the processing unit (10) and a remote processing unit (30, 32),
wherein the remote processing unit (30, 32) comprises a remote storing unit storing assignments between the biometric signal and the at least one operation mode, in particular between the biometric signal and the at least one program option, mode setting and/or parameter, and
wherein the processing unit (10) is adapted to communicate with the remote processing unit (30, 32) to select and/or execute the at least one operation mode, in particular according to the settings of the at least one program option, mode setting and/or parameter.

5. Appliance according to any of the previous claims, comprising a communication device (22) connected to the processing unit (10) and a remote processing unit (30, 32),
wherein the remote processing unit (30, 32) is adapted to edit the at least one program option, mode setting and/or program parameter and to make an assignment between the edited at least one program option, mode setting and/or at least one program parameter and a predefined biometric signal.

6. Appliance according to any of the previous claims, comprising a communication device (22) connected to the processing unit (10) and a remote processing unit (30, 32),
wherein the processing unit (10) is adapted to transmit the use of the appliance and/or the selected operation mode and/or parameter and/or accounting information to the remote processing unit (30, 32).

7. Appliance according to any of the claims 4 to 6, wherein the remote processing unit (30, 32) is a server (30) or a user station (32).

8. Appliance according to any of the previous claims,
wherein the processing unit (10) is adapted to accept another input for setting the program option, mode setting and/or program parameter and/or is adapted to set a default program option, default setting and/or a default parameter, if there is a missing or defective biometric signal.

9. Appliance according to any of the previous claims,
wherein the processing unit (10) is adapted to block execution of all or predefined program options, mode settings and/or program parameter, if there is a missing, defective or unauthorized biometric signal.

10. Appliance according to any of the previous claims,
wherein the at least one mode setting includes a display setting and/or a performance setting.

11. Appliance according to any of the previous claims,
wherein the appliance is a dishwasher (42), a washing machine (40), a toaster, a water dispenser, a light setting device, a display device, a TV set, an oven, a cooking hob, a coffee machine, or an espresso machine (1).

12. Appliance according to any of the previous claims,
wherein the biometric detection device (20) is a fingerprint detector and the biometric signal is a fingerprint signal.

13. Method of selecting an operation mode, a mode setting and/or an operation parameter of an appliance, in particular of a household-appliance (1, 40, 42) according to any of the previous claims, **characterized in that** the appliance comprises a biometric detection device (20) and the operation mode, mode setting and/or operation parameter is set in dependency of a biometric signal detected by the biometric detection device (20).
